Europäisches Patentamt

European Patent Office

Office européen des brevets

(19)

(11) **EP 0 752 771 B1**

(12) **FASCICULE DE BREVET EUROPEEN**

(45) Date de publication et mention
de la délivrance du brevet:
**24.08.2005 Bulletin 2005/34**

(51) Int Cl.⁷: **H04L 9/08**

(21) Numéro de dépôt: **96401336.1**

(22) Date de dépôt: **19.06.1996**

(54) **Procédé de traitement d'un signal numérique tel que le signal numérique en sortie ne peut se déduire du signal numérique en entrée, et utilisation de ce procédé pour le contrôle d'accès et/ou la signature binaire**

Verfahren zur Verarbeitung eines digitalen Signals in solcher Weise, dass das Ausgangs- nicht vom Eingangssignal abgeleitet werden kann, und Verwendung des Verfahrens zur Zugriffssteuerung und/oder digitaler Unterschrift

Method for processing a digital signal such that the output digital signal can not be derived from the input signal, and use of the method for access control and/or digital signatures

(84) Etats contractants désignés:
**DE FR GB IT**

(30) Priorité: **03.07.1995 FR 9508004**

(43) Date de publication de la demande:
**08.01.1997 Bulletin 1997/02**

(73) Titulaire: **THOMSON multimedia
92648 Boulogne Cédex (FR)**

(72) Inventeurs:
• **Fischer, Jean-Bernard
92050 Paris la Defense Cedex (FR)**
• **Gregoire, Louis
92050 Paris la Defense Cedex (FR)**
• **de Vito, Mario
92050 Paris la Defense Cedex (FR)**
• **Stern, Jacques
92050 Paris la Defense Cedex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 605 289        US-A- 33 189
US-A- 5 115 467**

EP 0 752 771 B1

## Description

La présente invention concerne un procédé de traitement d'un signal numérique de dimension k tel que le signal numérique en sortie ne peut se déduire du signal numérique en entrée.

Ce type de procédé est particulièrement utile dans les systèmes de communication dits sécurisés. Ces systèmes sont en général des systèmes à accès conditionnel nécessitant l'utilisation d'un mot de contrôle ou d'une signature. Les systèmes mettant en oeuvre ce type de communications sécurisées sont très nombreux. On peut en particulier citer les systèmes de télévision à péage, les systèmes de type bancaire permettant d'effectuer des transferts d'ordre ou tous autres systèmes de même type donnant lieu à des échanges d'informations confidentielles.

Dans les systèmes à accès conditionnel, tels que ceux implémentés dans les systèmes de télévision à péage, on utilise en général un signal numérique de n bits formant un mot de contrôle permettant, notamment, de commander l'embrouillage et le désembrouillage des informations transmises. Ce mot de contrôle doit être changé fréquemment et est, en général, transféré depuis la station émettrice vers le système récepteur ou terminal.

Ce mot de contrôle ne doit être accessible qu'à la personne autorisée. De ce fait, ce mot de contrôle est chiffré durant la transmission vers le récepteur qui est un système sécurisé tel qu'une carte à puce . Ce récepteur est éventuellement appairé à un système de desembrouillage non sécurisé et il fournit alors, à ce dernier le mot, de contrôle après déchiffrement. Pour réaliser ce type de transaction, on utilise un système cryptographique à clé secrète dans lequel l'émetteur et le récepteur partagent un signal numérique commun appelé clé secrète commune. De ce fait, l'émetteur chiffre le mot de contrôle et le récepteur le déchiffre par une opération symétrique.

Pour réaliser ce type d'opération, différents procédés de traitement sont connus de l'homme de l'art. Ainsi, on peut citer notamment le système DES pour "Data Encryption Standard".

Cette méthode présente l'inconvénient qu'il faut utiliser une fonction réversible afin de chiffrer puis déchiffrer le message. Or certains problèmes ne nécessitent pas l'utilisation d'un signal numérique fixé et significatif qui serait chiffré et déchiffré; il suffit souvent que l'expéditeur et le destinataire puissent partager un signal numérique aléatoire confidentiel. Il suffit alors d'utiliser une fonction à sens unique, c'est à dire une fonction qui ne permet pas de trouver l'image du signal numérique si la dite fonction n'est pas parfaitement connue. En particulier, on peut utiliser une fonction de hachage à clé, le principe de fonctionnement étant connu mais inexploitable sans la clé valide.

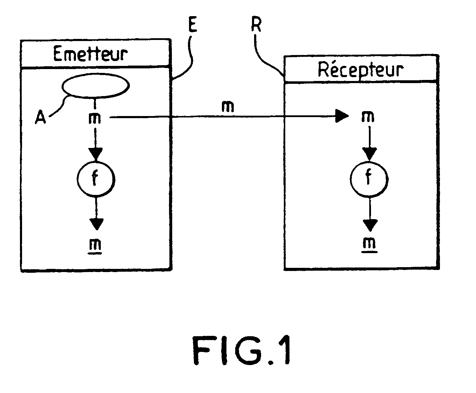

Ainsi, comme représenté sur la figure 1 qui concerne l'utilisation d'une fonction à sens unique, un signal numérique aléatoire m appelé sélecteur de mot de contrôle, est tiré au hasard par l'émetteur E comportant un circuit de génération de signal numérique aléatoire référencé A. Son image par la fonction à sens unique f est alors le signal numérique aléatoire confidentiel partagé par l'émetteur E et le récepteur R, appelés ci-après mot de contrôle. L'émetteur transmet le sélecteur de mot de contrôle m au récepteur et les deux calculent son image par la fonction de hachage à sens unique f avec la même clé, obtenant ainsi le même mot de contrôle m. La seule contrainte imposée pour la confidentialité est qu'il doit être impossible de calculer le mot de contrôle m à partir du sélecteur de mot de contrôle m sans connaître un certain secret, la clé partagée, qui se trouve dans deux domaines sécurisés: l'émetteur et le récepteur. Un exemple de ce type est donné dans le brevet americain US 5115 467.

L'état de l'art est d utiliser soit des fonctions réversibles cryptographiquement sûres, par exemple le DES, soit d'utiliser des fonctions cryptographiquement faibles dont la seule défense est la complexité calculatoire et le secret de la structure, ce qui revient à dire que la clé est la fonction elle-même et ce qui limite son usage et son universalité.

La présente invention a pour but de proposer un procédé de traitement de signaux numériques répondant notamment à ce problème, dans la mesure où la fonction est publique et que seule une clé de taille limitée est gardée secrète. La compromission d'une clé ne met pas en péril les systèmes utilisant le même schéma avec une clé différente

La présente invention a aussi pour but de proposer un procédé de traitement qui peut être utilisé dans tous systèmes de transmission de signaux numériques de type sécurisé.

En conséquence, la présente invention a pour objet un procédé de traitement d'un premier signal numérique de dimension k dans un système de communication dit sécurisé, tel qu'un second signal numérique (y) en sortie ne peut se déduire du premier signal numérique (x) en entrée, consistant à envoyer le premier signal numérique (x) sur un dispositif comprenant un circuit C et un second circuit réalisant une fonction à sens unique, caractérisé en ce que le procédé de traitement comporte les étapes suivantes :

- le premier signal numérique (x, x1) se trouvant en entrée est envoyé sur le circuit C modifiant le premier signal pour donner en sortie un troisième signal numérique (x, x'1) de dimension differente n ayant les caracteristiques, necessaires pour pouvoir être envoyé sur le circuit réalisant la fonction en sens unique;
- le troisième signal (x', x'1) en sortie du circuit C est envoyé sur le circuit réalisant la fonction à sens unique donnant en sortie le second signal numérique (y).

Selon un mode de réalisation, la fonction à sens unique est réalisée en multipliant le signal numérique (x") par une matrice M de dimensions n x m dont les coefficients $a_{ij}$ sont choisis aléatoirement une fois pour toute. Une fonction de ce type est décrite par exemple dans la demande de brevet français N° 92 15915 au nom de Jacques Stern.

De préférence, pour notamment limiter le stockage en mémoire, les coefficients $a_{ij}$ de la matrice sont générés par une fonction pseudo-aléatoire.

Selon ce mode de réalisation, le circuit d'embrouillage est choisi de manière à présenter de bonnes qualités de diffusion, c'est à dire qu'une modification très faible du signal en entrée entraîne une grande différence dans le signal en sortie. De préférence, la fonction d'embrouillage est commandée par une clé secrète (S).

De même, le circuit de formatage a pour but de transformer le signal en entrée en une donnée de dimension n bits et de poids approximativement d, d étant déterminé par la borne de Gilbert-Warshamov: $m = n.H_2(d/n)$ où $H_2(x)$ est la fonction d'entropie

$$H_2(x) = - x \log_2(x) - (1-x) \log_2(1-x).$$

Selon un mode de réalisation préférentiel, m=n/2; alors le poids du signal numérique en entrée de la fonction à sens unique doit être approximativement 0,11 x n.

Dans le cadre de la présente invention, les fonctions d'embrouillage et de formatage peuvent être réalisées selon l'une des trois méthodes suivantes, à savoir :

- soit un circuit d'embrouillage de type connu et un circuit de formatage dont l'entrée définit une permutation sur un mot binaire de longueur n et de poids d.
- soit un circuit d'embrouillage de type connu et un circuit de formatage dont l'entrée définit de façon unique un mot binaire de longueur n et de poids d.
- soit un circuit unique d'embrouillage et de permutation dont l'entrée et la clé secrète définissent un générateur pseudo-aléatoire biaisé tel que le mot en sortie de longueur n soit avec une très forte probabilité de poids d ou approchant.

La présente invention a aussi pour objet l'utilisation du procédé décrit ci-dessus pour générer un mot de contrôle dans les systèmes à contrôle d'accès et en particulier dans le cas d'un système de télévision à péage pour générer le ou les mots de contrôle en utilisant la même fonction à sens unique au niveau de l'émetteur et au niveau du ou des récepteurs.

D'autres caractéristiques et avantages de la présente invention apparaîtront à la lecture de la description détaillée de différents modes de réalisation, cette description étant faite avec référence aux dessins ci-annexés dans lesquels :

- la figure 1 déjà décrite représente schématiquement l'utilisation d'une fonction à sens unique lors de la transmission d'un signal numérique entre un émetteur et un récepteur ;
- la figure 2 est un schéma représentant un dispositif permettant d'obtenir un signal numérique en sortie qui ne peut se déduire du signal numérique en entrée ;
- la figure 3 est une représentation schématique d'un autre dispositif permettant d'obtenir un signal numérique en sortie qui ne peut se déduire du signal numérique en entrée ;
- la figure 4 est une représentation schématique d'un autre dispositif permettant d'obtenir un signal numérique en sortie qui ne peut se déduire du signal numérique en entrée ;
- la figure 5 est une vue schématique d'un dispositif permettant à partir d'un signal numérique en entrée d'obtenir plusieurs signaux numériques en sortie qui ne peuvent se déduire du signal numérique d'entrée ;
- les figures 6 et 7 sont des représentations schématiques utilisant l'un des dispositifs décrits ci-dessus pour réaliser une vérification cryptographique ;
- la figure 8 est un schéma montrant l'utilisation du dispositif des figures 2, 3 et 4 pour réaliser un générateur pseudo-aléatoire.

Le procédé et le dispositif conformes à la présente invention sont basés sur le problème du décodage par syndrome (SD) décrit dans la demande de brevet français N°92 15915 au nom de Jacques Stern qui peut être explicité de la manière suivante : soit une matrice binaire M et un vecteur binaire y, il s'agit de trouver un vecteur binaire x de poids relativement fort ou relativement faible tel que Mx = y. Par poids, on entend le nombre de bits à 1 dans le vecteur concerné. Le problème posé ci-dessus est en fait très difficile à résoudre par les moyens de calcul connus à ce jour si les dimensions n x m de la matrice M et le poids de Hamming du vecteur x sont choisis judicieusement. On a démontré qu'avec les moyens de calcul actuels, le problème est très difficile lorsque le signal numérique x en entrée présente un poids de Hamming d faible. De manière générale, les paramètres d, n, m donnant le poids de Hamming et les dimensions de la matrice M sont choisis sensiblement sous la borne Gilbert-Warshamov donnant une valeur limite théorique pour le poids minimal d d'un code (n,m) aléatoire, à savoir :

$$m = n.H_2(d/n)$$

où $H_2(x)$ est la fonction d'entropie $H_2(x) = -x.\log_2(x) - (1-x).\log_2(1-x)$

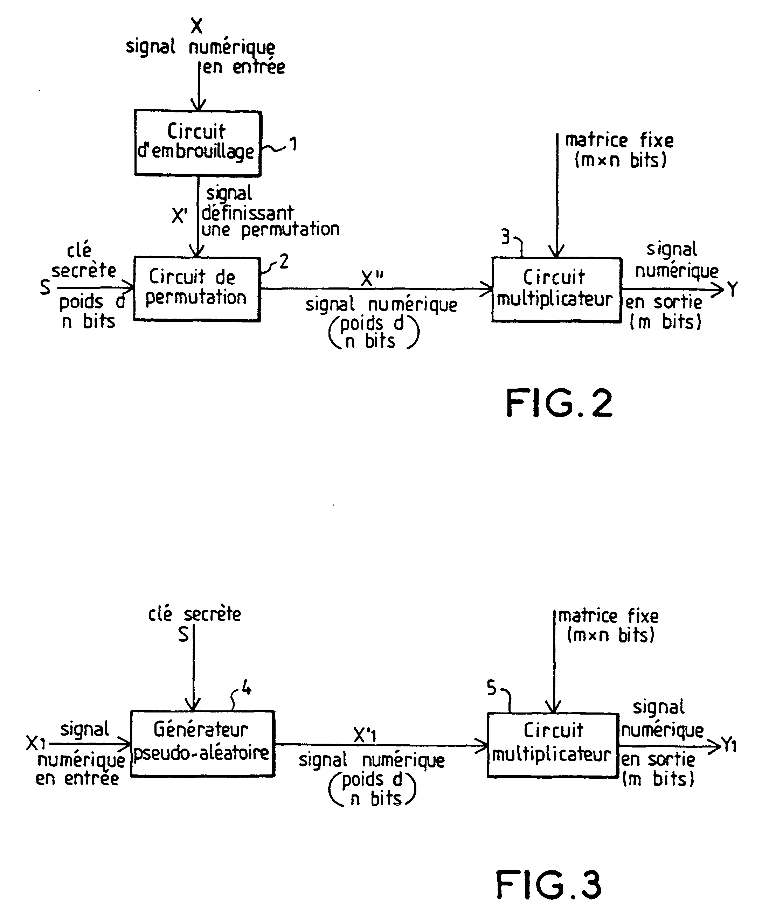

Sur la figure 2, on a représenté schématiquement un dispositif permettant la mise en oeuvre d'un premier procédé de traitement d'un signal numérique tel que le signal numérique en sortie ne peut se déduire du signal numérique en entrée.

Dans ce dispositif, le signal numérique en entrée (x) est envoyé sur un circuit d'embrouillage (1) de type connu de l'homme de l'art. Ce signal numérique est un signal constitué par des mots binaires de dimension k. On obtient en sortie un signal numérique (x') définissant une permutation qui est envoyée sur un circuit de permutation (2).

Ce circuit possède deux entrées : l'une admet la définition de la permutation, l'autre le mot binaire sur lequel est appliqué cette permutation; en sortie, on obtient le mot permuté. Le circuit reçoit sur la première entrée le signal (x'), sur la seconde entrée une clé secrète (S) qui, dans le mode de réalisation décrit, est constituée par un signal numérique binaire de n bits présentant un poids d tel que défini précédemment. En sortie du circuit de permutation (2), on obtient donc un signal numérique aléatoire (x") comportant n bits et présentant un poids d.

Ce signal (x") est envoyé sur un circuit multiplicateur (3) qui procède à la multiplication matricielle du mot binaire de n bits en entrée avec une matrice binaire fixe de dimensions n x m bits. En sortie, on obtient un signal numérique (y) de m bits.

Dans le schéma décrit ci-dessus, le signal numérique en entrée (x) est utilisé pour permuter la clé secrète (S). Pour des raisons de sécurité, le signal numérique en entrée est tout d'abord embrouillé et le résultat est utilisé pour définir une permutation sur n bits. L'embrouillage peut être relativement simple, car il suffit que les bits soient bien diffusés, c'est à dire que la valeur d'un bit du signal en entrée influence la valeur de beaucoup de bits en sortie. De nombreuses possibilités sont ici à la disposition de l'homme de l'art, par exemple l'utilisation de tables de correspondance ou de générateurs pseudo-aleatoires.

La définition d'une permutation sur n bits peut se faire en définissant l'image de chaque bit ou bien en utilisant un générateur de permutation de type connu de l'homme de l'art, comme décrit par exemple dans l'article de M.Luby & C.Rackoff, "How to construct pseudo random permutation from pseudo random functions", SIAM.J of computing 17(2) Avril 1988, ce qui demande moins de données en entrée. On peut éviter d'avoir à stocker toute la clé secrète en utilisant une clé à n bits dans laquelle les premiers bits sont à 1 et tous les autres à O. Dans ce cas, la clé n'est plus secrète, et tout le "secret" du schéma se trouve dans l'embrouillage du signal numérique en entrée qui doit être suffisamment bon pour la sécurité demandée.

La matrice de dimensions m x n bits est constituée de coefficients $a_{ij}$ qui ont été choisis aléatoirement une fois pour toute. Cette matrice est stockée dans une mémoire. Pour éviter de mémoriser toute la matrice M, il est possible, de manière connue, de générer chaque coefficient $a_{ij}$ par l'intermédiaire d'une fonction pseudo-aléatoire.

Le signal numérique (y) en sortie présentant une dimension de m bits peut être utilisé comme mot de contrôle dans tous les systèmes à contrôle d'accès. Dans le cas d'un système de télévision à péage, le signal numérique (y) en sortie peut être généré aussi bien au niveau de l'émetteur qu'au niveau du ou des récepteurs.

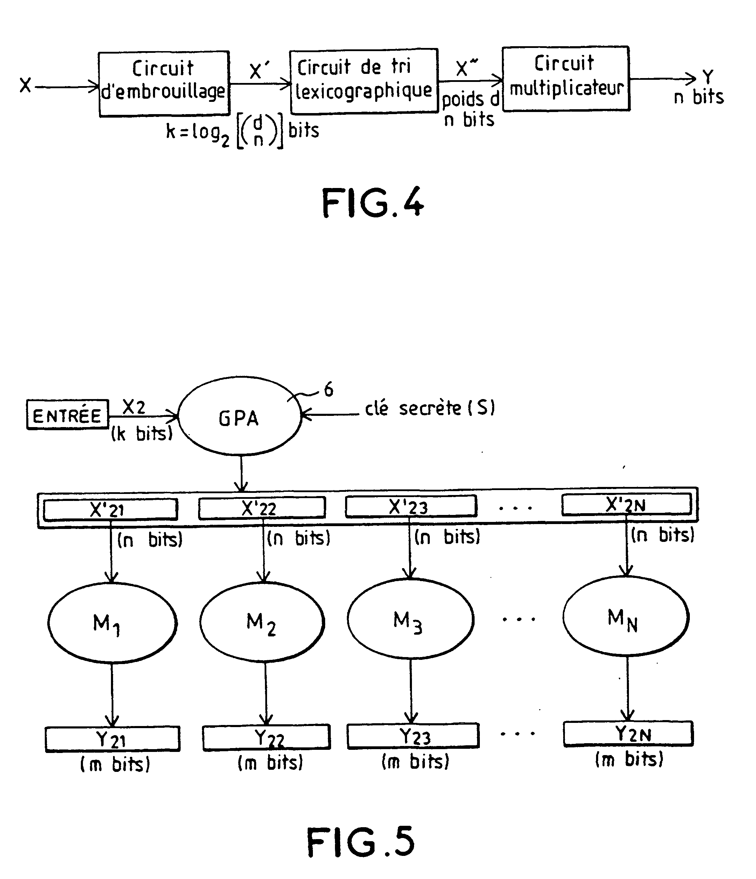

On décrira maintenant avec référence à la figure 4, une autre méthode pour traiter un signal numérique de dimension k tel que le signal numérique en sortie ne peut se déduire du signal numérique en entrée ainsi qu'un dispositif pour la mise en oeuvre de cette méthode. Dans le cas de la figure 4, le signal numérique (x) en entrée est envoyé sur un circuit d'embrouillage (1) de type connu de l'homme de l'art. Ce signal numérique est un signal constitué par des mots binaires de dimension k. On obtient en sortie un signal numérique (x') définissant de façon unique l'index d'un mot dans un classement lexicographique de tous les mots possibles de poids d et de longueur n.

Une méthode préférentielle pour le formatage du signal (x') en un mot de poids d et de longueur n est l'utilisation d'un tri lexicographique bien connu de l'homme de l'art. Il est ainsi possible de définir un mot de poids d et de longueur n avec un minimum de bits, c'est à dire le logarithme à base 2 du nombre de combinaisons de d parmi n; k aura alors cette valeur.

L'algorithme suivant est une méthode de tri lexicographique :

Entrée :

v : valeur de l'index
n : longueur du mot
d : poids du mot

Sortie :

suite de bits de longueur n et de poids d

1. c = nombre de combinaisons de d parmi n
2. tant que n > 0 faire

a) c' = c . (n - d) /n
b) si v ≤ c'

sortir le bit 0
c = c'

c) sinon

sortir le bit 1
i = i - c'
c =c.d/n

d) n = n - 1

On décrira maintenant avec référence à la figure 3, une autre méthode pour traiter un signal numérique de dimension k tel que le signal numérique en sortie ne peut se déduire du signal numérique en entrée ainsi qu'un dispositif pour la mise en oeuvre de cette méthode. Dans le cas de la figure 3, le signal numérique $(x_1)$ en entrée, qui est un signal comportant k bits, est envoyé sur un générateur pseudo-aléatoire (4) en même temps qu'une clé secrète constituée par un signal numérique (S).

Le générateur pseudo-aléatoire est choisi de telle sorte que le signal numérique en sortie présente pour une dimension n un poids de Hamming d fixé avec une forte probabilité, n dépendant du circuit réalisant la fonction unidirectionnelle. Ainsi, en sortie du générateur pseudo-aléatoire, on obtient un signal numérique aléatoire $(x'_1)$ de longueur n bits et présentant un pods d'environ d. Ensuite le signal $(x'_1)$ est envoyé sur un circuit multiplicateur (5) où il est multiplié par les coefficients d'une matrice fixe présentant des dimensions m x n bits de manière à donner en sortie un signal numérique $(y_1)$ présentant une longueur de m bits. La matrice fixe est une matrice identique à celle décrite avec référence à la figure 2.

L'utilisation d'un générateur pseudo-aléatoire de bonne qualité pour obtenir le signal numérique aléatoire assure une diffusion suffisante pour notre application. De ce fait, si la clé reste secrète, l'embrouillage est suffisamment bon pour assurer une bonne sécurité même si le signal numérique en entrée est connu.

Toutefois, l'utilisation d'un générateur pseudo-aléatoire pour définir les positions binaires des signaux numériques entraîne un problème. En effet, certaines positions peuvent être produites plus d'une fois. Dans le cas où la mémoire de stockage des positions binaires des signaux est suffisante, on peut simplement éliminer la valeur redondante et en tirer une autre, mais si on ne peut pas les stocker, en particulier lorsque le calcul est effectué dans une carte à puces, alors le poids du signal numérique aléatoire peut être inférieur au nombre de positions tirées. Ceci doit être pris en compte et il est nécessaire de tirer plus d'informations que le poids pour obtenir la valeur souhaitée en moyenne. Lorsque le poids des mots en entrée de la fonction unidirectionnelle n'a pas besoin d'être exactement d, mais peut-être une valeur proche, cette méthode est alors valable à condition de calculer la répartition statistique des valeurs non redondantes. Ainsi, si l'on cherche à obtenir une valeur moyenne de 56 positions non redondantes, on s'aperçoit qu'il faut tirer 59 positions, et on obtient 25% des tirages à exactement 56, 66% entre 55 et 57 et 98% entre 53 et 59.

On décrira maintenant un autre mode de réalisation du système permettant de mettre en oeuvre un procédé de traitement d'un signal numérique, tel que le signal numérique en sortie ne peut se déduire du signal numérique en entrée, dans lequel à partir d'un seul signal numérique en entrée on peut obtenir plusieurs signaux numériques en sortie répondant auxdits critères.

Comme représenté sur la figure 5, le signal numérique en entrée $(x_2)$ est envoyé sur un générateur pseudo-aléatoire (6) en même temps qu'une clé secrète (S). Si le signal en entrée est un signal numérique de longueur k bits utilisé pour produire des signaux en sortie $(x'_{2.1})$, $(x'_{2.2})$, ..., $(x'_{2.i})$, ..., $(x'_{2.N})$ présentant des longueurs de n bits et des poids approximatifs $d_i$, il est possible de produire N x n bits alimentant ainsi N multiplicateurs matriciels $(M_1)$, $(M_2)$, $(M_3)$ ..., $(M_N)$, de manière à obtenir N signaux numériques en sortie ayant chacun une longueur de m bits. La matrice utilisée au niveau des multiplicateurs $(M_1, M_2, M_3, ... M_N)$ présente les mêmes caractéristiques que la matrice décrite avec référence aux figures 2 à 4. La production de tels signaux selon un mode préférentiel nécessite l'utilisation d'un générateur pseudo-aléatoire fiable permettant de générer environ N x n bits.

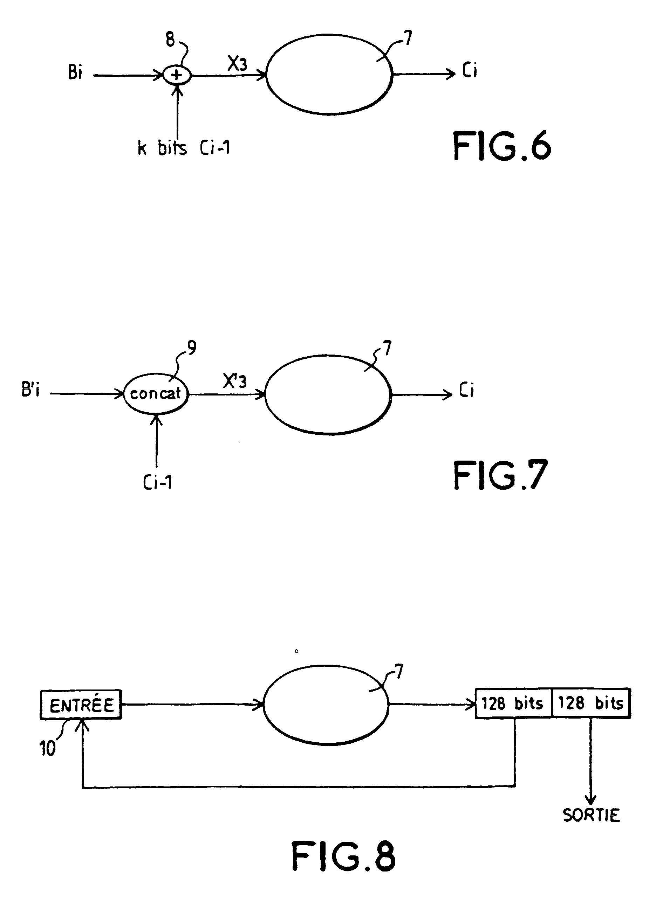

Les dispositifs décrits ci-dessus peuvent être utilisés dans de nombreuses applications. Ainsi, comme représenté sur les figures 6 et 7, les dispositifs décrits ci-dessus peuvent être utilisés pour calculer un code de détection d'erreurs cryptographique avec des clés secrètes partagées. Ceci signifie que l'émetteur et le récepteur partagent une clé secrète et le code de détection d'erreurs est calculé et vérifié en utilisant cette clé. Comme représenté sur la figure 6, un message (M) est divisé en blocs comportant k bits référencé $(B_i)$, i variant de 1 à n. On défini $(C_0)$ comme un signal numérique fixe présentant une longueur de k bits, $(C_0)$ pouvant être uniformément nul, le code de détection d'erreurs est défini comme $(C_n)$ où $(C_i)$ est obtenu comme représenté sur la figure 6. Dans ce cas, un dispositif correspondant à l'ensemble des circuits des figures 2 à 4 est référencé (7). Le circuit est défini de telle façon que k=m (la taille du signal en entrée est identique à celle du signal en sortie). Il reçoit en entrée un signal numérique $(x_3)$ de k bits issu d'un additionneur (8) qui reçoit sur une entrée un des blocs $(B_i)$ et sur l'autre entrée k bits d'un signal numérique $(C_{i-1})$ qui est en fait le signal issu du circuit (7) à l'étape précédente de manière à donner le signal $(C_i)$.

Si k est supérieur à m, il existe une autre manière pour rattacher k-m bits d'un message à un mot de sortie. Dans ce cas, le message (M) qui est un mot binaire, est divisé en blocs de k-m bits, $(B'_1)$, $(B'_2)$, ..., $(B'_n)$. Comme représenté sur la figure 7, $(B'_i)$ est envoyé en entrée d'un circuit de concaténation (9) avec $(C_{i-1})$ qui est un signal de taille m bits, le mot binaire $(x'_3)$ issu du circuit de concaténation est envoyé sur un circuit (7) tel que défini ci-dessus de manière à obtenir le mot $(C_i)$.

D'autre part, le circuit décrit aux figures 2, 3 et 4 peut aussi être utilisé comme un générateur binaire pseudo-aléatoire lorsque le signal en entrée est de taille inférieure au signal en sortie. Par exemple, comme représenté sur la figure 8, si le signal d'entrée est constitué par des mots binaires de k bits avec k strictement inférieur à m, on peut utiliser le schéma suivant : calculer l'image de l'entrée, prendre les m-k premiers bits pour la séquence aléatoire en sortie, et utiliser les k bits suivants pour créer un nouveau mot d'entrée. Ceci est représenté sur la figure 8. Sur cette figure, un mot d'entrée 10 est envoyé sur le circuit 7. Le mot de sortie de m bits issu du circuit 7 est séparé en deux, les m-k bits du début étant envoyés vers la sortie, comme formant la sortie d'un générateur pseudo-aléatoire, le reste étant réinjecté comme vu précédemment. Dans le mode de réalisation représenté, k = m - k = 128 bits. Il est évident que k peut être différent de m - k.

Dans le cas d'une telle utilisation, comme générateur pseudo-aleatoire, le circuit de brouillage peut être ommis.Il est évident pour l'homme de l'art que le système décrit ci-dessus peut être utilisé de nombreuses manières dans le domaine de la cryptographie appliqué aux systèmes sécurisés, tels que la télévision à péage, les systèmes bancaires, les systèmes d'accès sécurisé, etc...

## Revendications

1. Procédé de traitement d'un premier signal numérique de dimension k dans un système de communication sécurisé, tel qu'un second signal numérique (y) en sortie ne peut se déduire du premier signal numérique (x) en entrée, consistant à envoyer le premier signal numérique sur un dispositif comprenant un circuit C et un second circuit réalisant une fonction à sens unique, **caractérisé en ce que** le procédé de traitement comporte les étapes suivantes :

   - le premier signal en entrée (x) est envoyé sur le circuit C modifiant le premier signal pour donner en sortie un troisième signal numérique (x") de dimension différente ayant les caractéristiques nécessaires pour pouvoir être envoyé sur le circuit réalisant la fonction à sens unique;
   - le troisième signal (x") en sortie du circuit C est envoyé sur le circuit réalisant la fonction à sens unique donnant en sortie le second signal numérique (y) ;

2. Procédé selon la revendication 1, **caractérisé en ce que** le circuit C est constitué par un circuit d'embrouillage (1) recevant en entrée le premier signal numérique (x) et par un circuit de formatage recevant un signal intermédiaire issu du circuit d'embrouillage et donnant en sortie le troisième signal numérique (x") acceptable par le circuit réalisant la fonction à sens unique.

3. Procédé selon la revendication 2, **caractérisé en ce que** le circuit de formatage est constitué par un circuit de génération d'une permutation, la permutation ainsi définie étant appliquée sur le troisième signal numérique de dimension n et de poids de Hamming d.

4. Procédé selon la revendication 2, **caractérisé en ce que** le circuit de formatage est constitué par un circuit de tri lexicographique ;

5. Procédé selon la revendication 1, **caractérisé en ce que** le circuit C est constitué par un générateur pseudo-aléatoire dont le germe est constitué par le premier signal (x1) numérique en entrée ; le générateur donnant en sortie le troisième signal numérique (x'1) de dimension n et avec une forte probabilité de poids de Hamming d.

6. Procédé selon l'une quelconque des revendications 1 à 5, **caractérisé en ce que** le circuit C est commandé par un signal numérique appelé clé secrète.

7. Procédé selon la revendication 6, **caractérisé en ce que** la clé secrète est un signal binaire de dimension n et de poids de Hamming approximativement d.

8. Procédé selon la revendication 1, **caractérisé en ce que** la fonction à sens unique est obtenue en multipliant le troisième signal numérique (x) sous forme binaire par une matrice binaire.

9. Procédé selon la revendication 8, **caractérisé en ce que** la matrice est de dimension m x n, n représentant le nombre de colonnes de la matrice.

10. Procédé selon les revendications 8 et 9, **caractérisé en ce que** la matrice binaire est générée aléatoirement.

11. Procédé selon la revendication 10, **caractérisé en ce que** les coefficients $a_{ij}$ de la matrice M sont générés par un circuit pseudo-aléatoire.

12. Procédé selon l'une quelconque des revendications 1 à 11, **caractérisé en ce que** les paramètres d, n, m donnant le poids de Hamming (d) et les dimensions de la matrice M (n, m) sont choisis sensiblement sous la borne de Gilbert-Warshamov, à savoir :

$$m = n \times H_2(d/n)$$

où $H_2(y)$ est la fonction d'entropie :

$$H_2(y) = -y \times \log_2(y) - (1-y) \times \log_2(1-y)$$

13. Procédé selon l'une quelconque des revendications 1 à 12, **caractérisé en ce que** les dimensions de la matrice sont n et m = n/2, et que d est égal à 0,11 x n.

**14.** Procédé selon la revendication 3, **caractérisé en ce que** l'on envoie le signal issu du circuit de génération pseudo-aléatoire sur N circuits réalisant une fonction unidirectionnelle de manière à obtenir en sortie N signaux présentant une longueur de m bits.

**15.** Procédé selon l'une quelconque des revendications 1 à 4, **caractérisé en ce qu'**il est utilisé pour générer un mot de contrôle dans les systèmes à contrôle d'accès.

**16.** Procédé selon la revendication 15, **caractérisé en ce que**, dans le cas d'un système de télévision à péage, le ou les mots de contrôle sont générés en utilisant la même fonction à sens unique au niveau de l'émetteur et au niveau du ou des récepteurs.

**17.** Procédé selon l'une quelconque des revendications 1 à 4, **caractérisé en ce qu'**il est utilisé pour calculer un code de détection d'erreurs cryptographique avec des clés secrètes partagées.

**18.** Procédé selon l'une quelconque des revendications 1 à 4, **caractérisé en ce qu'**il est utilisé pour construire un générateur pseudo-aléatoire.

**Patentansprüche**

**1.** Verfahren zur Verarbeitung eines ersten digitalen Signals der Dimension k in einem so genannten gesicherten Kommunikationssystem, derart, dass ein zweites digitales Ausgangssignal (y) nicht vom ersten digitalen Eingangssignal (x) abgeleitet werden kann, wobei das Verfahren darin besteht, das erste digitale Signal an eine Vorrichtung zu senden, die eine Schaltung C und eine zweite Schaltung aufweist, die eine Einwegfunktion durchführt, **dadurch gekennzeichnet, dass** das Verarbeitungsverfahren die folgenden Schritte aufweist:

- das erste Eingangssignal (x) wird an die Schaltung C gesendet, die das erste Signal so verändert, dass an ihrem Ausgang ein drittes digitales Signal (x") einer anderen Dimension vorliegt, das die notwendigen Eigenschaften hat, um an die Schaltung gesendet werden zu können, die die Einwegfunktion durchführt;
- das dritte Signal (x") am Ausgang der Schaltung C wird an die Schaltung gesendet, die die Einwegfunktion durchführt und am Ausgang das zweite digitale Signal (y) ausgibt.

**2.** Verfahren nach Anspruch 1, **dadurch gekennzeichnet, dass** die Schaltung C aus einer Verschlüsselungsschaltung (1), die am Eingang das erste digitale Signal (x) empfängt, und aus einer Formatierungsschaltung besteht, die ein von der Verschlüsselungsschaltung kommendes Zwischensignal empfängt und am Ausgang das dritte digitale Signal (x") liefert, das für die die Einwegfunktion ausführende Schaltung akzeptabel ist.

**3.** Verfahren nach Anspruch 2, **dadurch gekennzeichnet, dass** die Formatierungsschaltung aus einer Schaltung zur Erzeugung einer Permutation besteht, wobei die so definierte Permutation auf das dritte digitale Signal mit der Dimension n und der Hamming-Gewichtung d angewandt wird.

**4.** Verfahren nach Anspruch 2, **dadurch gekennzeichnet, dass** die Formatierungsschaltung aus einer lexikograpischen Sortierschaltung besteht.

**5.** Verfahren nach Anspruch 1, **dadurch gekennzeichnet, dass** die Schaltung C aus einem Pseudozufallsgenerator besteht, dessen Kern aus dem ersten digitalen Eingangssignal (x1) besteht, wobei der Generator am Ausgang das dritte digitale Signal (x'1) der Dimension n und mit einer hohen Wahrscheinlichkeit der Hamming-Gewichtung d liefert.

**6.** Verfahren nach einem der Ansprüche 1 bis 5, **dadurch gekennzeichnet, dass** die Schaltung C von einem digitalen Signal gesteuert wird, das geheimer Schlüssel genannt wird.

**7.** Verfahren nach Anspruch 6, **dadurch gekennzeichnet, dass** der geheime Schlüssel ein Binärsignal der Dimension n und mit der Hamming-Gewichtung von etwa d ist.

**8.** Verfahren nach Anspruch 1, **dadurch gekennzeichnet, dass** die Einwegfunktion durch Multiplizieren des dritten digitalen Signals (x) in binärer Form mit einer Binärmatrix erhalten wird.

**9.** Verfahren nach Anspruch 8, **dadurch gekennzeichnet, dass** die Matrix die Dimension m x n hat wobei n die Anzahl von Spalten der Matrix darstellt.

**10.** Verfahren nach den Ansprüchen 8 und 9, **dadurch gekennzeichnet, dass** die Binärmatrix zufällig erzeugt.

**11.** Verfahren nach Anspruch 10, **dadurch gekennzeichnet, dass** die Koeffizienten $a_{ij}$ der Matrix M von einer Pseudozufallsschaltung erzeugt werden.

**12.** Verfahren nach einem der Ansprüche 1 bis 11, **dadurch gekennzeichnet, dass** die Parameter d, n, m, die die Hamming-Gewichtung (d) ergeben, und die Dimensionen (n, m) der Matrix m im Wesentlichen unter der Gilbert-Warshamov-Schranke ge-

wählt werden, nämlich:

$$M = n \times H_2(d/n)$$

wobei $H_2(y)$ die Entropiefunktion ist:

$$H_2(y) = -y \times \log_2(y) - (1-y) \times \log_2(1-y)$$

13. Verfahren nach einem der Ansprüche 1 bis 12, **dadurch gekennzeichnet, dass** die Dimensionen der Matrix n und m = n/2 sind, und dass d gleich 0,11 x n ist.

14. Verfahren nach Anspruch 3, **dadurch gekennzeichnet, dass** das von der Pseudozufallsschaltung kommende Signal an N eine Einwegfunktion ausführende Schaltungen angelegt wird, um am Ausgang N Signale zu erhalten, die eine Länge von m Bits haben.

15. Verfahren nach einem der Ansprüche 1 bis 4, **dadurch gekennzeichnet, dass** es verwendet wird, um ein Kontrollwort in den Systemen mit Zugangsberechtigung zu erzeugen.

16. Verfahren nach Anspruch 15, **dadurch gekennzeichnet, dass** bei einem Pay-TV-System das Kontrollwort oder die Kontrollwörter erzeugt werden, indem die gleiche Einwegfunktion beim Sender und beim Empfänger oder den Empfängern verwendet wird.

17. Verfahren nach einem der Ansprüche 1 bis 4, **dadurch gekennzeichnet, dass** es verwendet wird, um einen kryptographischen Fehlererfassungscode mit verteilten geheimen Schlüsseln zu berechnen.

18. Verfahren nach einem der Ansprüche 1 bis 4, **dadurch gekennzeichnet, dass** es verwendet wird, um einen Pseudozufallsgenerator zu konstruieren.

**Claims**

1. Method of processing a first digital signal of dimension k, in a so-called secure communication system, such that a second digital signal (y) at output cannot be deduced from the first digital signal (x) at input, comprising dispatching the first digital signal to a device comprising a circuit C and a second circuit effecting a one-way function, **characterized in that** the processing includes the following steps:

   - the first digital signal (x) at the input is dispatched to the circuit C modifying said first signal to give as output a third digital signal (x") of another dimension n having the feature necessary to be applied to the device effecting the one-way function:

   - the third signal output (x") from the circuit C is dispatched to the second circuit effecting the one-way function giving as output the second digital signal.

2. Method according to claim 1, wherein the circuit C comprises a scrambling circuit (1) receiving the first digital signal (x) as input and a formatting circuit for receiving an intermediate signal output from the scrambling circuit and giving as output the third digital signal (x") for input to the second circuit effecting the one-way function.

3. Method according to claim 2, wherein the formatting circuit comprises a permutation generation circuit, the permutation thus defined being applied to the third digital signal of dimension n and of Hamming weight d.

4. Method according to claim 2, wherein the formatting circuit comprises a lexicographic sorting circuit.

5. Method according to claim 1, wherein the circuit C comprises a pseudo-random generator whose seed consists of the first digital signal (x1) at input, the generator giving as output the third digital signal (x'1) of dimension n and with a high probability of Hamming weight d.

6. Method according to any of claims 1 to 5, **characterized in that** the circuit C is controlled by another digital signal (S) termed the secret key.

7. Method according to claim 6, wherein the secret key is a binary signal of dimension n and of Hamming weight approximately d.

8. Method according to claim 1, wherein the one-way function is obtained by multiplying the third digital signal (x1) in binary form by a binary matrix.

9. Method according to claim 8, wherein the matrix is of dimension m.times.n, n representing the number of columns of the matrix.

10. Method according to claims 8 and 9, wherein the binary matrix is randomly generated.

11. Method according to claim 10, wherein the coefficients aij of the matrix M are generated by a pseudo-random circuit.

12. Method according to any of claims 1 to 11, wherein the parameters d, n, m giving the Hamming weight (d) and the dimensions of the matrix M (n,m) are chosen substantially below the Gilbert-Warshamov bound, namely:

$$m = n.times.H2 (d/n)$$

Where H2 (y) is the entropy function:

$$H2(y) = -yxlog2 (y) - (1-y)xlog2 (1-y).$$

13. Method according to any of claims 1 to 12, wherein the dimensions of the matrix are n and m=n/2, and in that is equal to 0.11.times.n.

14. Method according to claim 3, **characterized in that** the signal from the pseudo-random generation circuit is dispatched to N circuits effecting a unidirectional function in such a way that to obtain at output N signals having a length of m bits.

15. Method according to any of claims 1 to 4, **characterized in that** it is used to generate a control word within access control systems.

16. Method according to claim 15, **characterized in that**, in the case of a subscription television system, the control word or words are generated using the same one-way function at sender level and at receiver(s) level.

17. Method according to any of claims 1 to 4, **characterized in that** it is used to calculate a code of cryptographic error detection with shared secret keys.

18. Method according to any of claims 1 to 4, **characterized in that** it is used to build a pseudo-random generator.

FIG.1

X
signal numérique
en entrée

Circuit
d'embrouillage ⟩ 1

clé
secrète
S
poids d
n bits

signal
X' définissant
une permutation

Circuit de
permutation ⟩ 2

X"
signal numérique
$\left(\begin{array}{c} poids\ d \\ n\ bits \end{array}\right)$

matrice fixe
(m×n bits)

3

Circuit
multiplicateur

signal
numérique
en sortie
(m bits)
Y

## FIG.2

clé secrète
S

matrice fixe
(m×n bits)

4

signal
X1
numérique
en entrée

Générateur
pseudo-aléatoire

X'1
signal numérique
$\left(\begin{array}{c} poids\ d \\ n\ bits \end{array}\right)$

5

Circuit
multiplicateur

signal
numérique
en sortie
(m bits)
Y1

## FIG.3

11

FIG.4

FIG.5

FIG.6

FIG.7

FIG.8